# EUROPÄISCHE PATENTSCHRIFT

(11) **EP 1 391 671 B1**
(45) Veröffentlichungstag und Bekanntmachung des Hinweises auf die Patenterteilung: **17.05.2006**
(21) Anmeldenummer: 03018000.4
(22) Anmeldetag: 07.08.2003
(51) Int. Cl.: F27B 7/33, F27B 7/38, F27D 15/02

(54) **Anlage zur Herstellung von Zementklinker aus Rohmehl**
Plant for manufacturing cement clinker from raw meal
Installation pour la fabrication de clinker de ciment à partir de farine crue

(30) Priorität: 21.08.2002 DE 10238130
(43) Veröffentlichungstag der Anmeldung: 25.02.2004
(73) Patentinhaber: KHD Humboldt Wedag GmbH, 51170 Köln (DE)
(72) Erfinder: Filges, Ralf, 51427 Bergisch Gladbach (DE)

(56) Entgegenhaltungen:
- DE-A- 1 758 343
- DE-A- 19 546 174
- GB-A- 431 090
- GB-A- 831 413
- US-A- 4 123 850

## Beschreibung

Die Erfindung betrifft eine Anlage zur Herstellung von Zementklinker aus Rohmehl, das nach seiner Vorwärmung und Calcinierung in der Sinterzone eines Drehrohrofens zum Zementklinker gebrannt wird, der in einem nachgeschalteten Kühler gekühlt wird.

Bekannt sind Drehrohröfen mit angebautem Satellitenkühler (z. B. "Cement Data Book" von Walter H. Duda 2. Auflage 1977, Seiten 445 und 446). Dabei wird der im Drehrohrofen gebrannte Zementklinker im glühend heißen Zustand nicht über das Drehofenende nach unten auf einen nachgeschalteten Klinkerkühler abgeworfen, sondern das Drehofenauslaufende ist geschlossen, und der Drehofenmantel hat um den Umfang verteilte Klinkeraustrittsöffnungen, an welche um den Umfang verteilte parallel zum Drehofen liegende Satellitenkühlrohre angeflanscht sind, z. B. 9 bis 12 Stück, die ohne eigenen Antrieb zusammen mit dem Drehofen mitgedreht werden. Beim Durchwandern der einzelnen Satellitenkühlrohre, die von Kühlluft durchströmt sind, wird der heiße Zementklinker allmählich abgekühlt. Infolge des hohen Gesamtgewichtes und der großen Bauteil-Abmessungen von Drehofen und Satellitenkühler ist die Kapazität einer derartigen Anlage zur Herstellung von Zementklinker begrenzt. Daher sind Neuinstallationen von Dehrohröfen mit Satellitenkühler in letzterer Zeit nicht mehr erfolgt. Jedoch sind weltweit noch viele in früherer Zeit installierte Drehofenanlagen mit Satellitenkühler in Betrieb, bei denen der Wunsch nach einem Umbau mit Einsatz eines Rostkühlers insbesondere Schubrostkühlers statt eines Satellitenkühlers besteht.

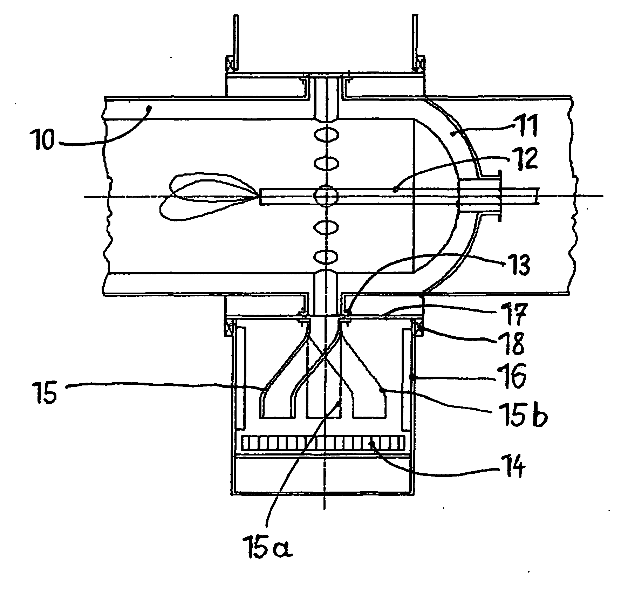

Aus der GB 431 090 A Fig. 1 ist es bei einem Verfahren zur Herstellung von Weißzementklinker bekannt, den Klinker nicht über das offene Drehofenauslaufende auf einen nachgeschalteten von Kühlluft durchströmten Klinkerkühler abzuwerfen, sondern den Weißzementklinker durch um den Drehofenmantel verteilte Öffnungen austreten zu lassen und ohne Zutritt eines Sauerstoff enthaltenden Gases in einem Kühlbehälter aufzufangen.

Der Erfindung liegt die Aufgabe zugrunde, eine Zementklinkerherstellungsanlage mit Drehrohrofen und Rostkühler zu schaffen, die ohne großen Aufwand durch Umrüsten einer vorhandenen Drehofen-Satellitenkühleranlage zu realisieren ist, insbesondere unter Beibehaltung des vorhandenen Drehofens mit seinen existierenden Dimensionen und Bauteilen.

Diese Aufgabe wird gemäß der Erfindung mit einer Zementklinkerherstellungsanlage mit den Merkmalen des Anspruchs 1 gelöst. Vorteilhafte Ausgestaltungen der Erfindung sind in den Unteransprüchen angegeben.

Charakteristisch für die erfindungsgemäße Anlage ist, dass der heiße Zementklinker aus dem Drehofen nicht wie heute meist üblich über das offene Drehofenende nach unten auf einen nachgeschalteten Rostkühler abgeworfen wird, sondern das Drehofenauslaufende ist geschlossen bis auf die Durchführung der Brennerlanze zum Beheizen der Ofen-Sinterzone, und der heiße Zementklinker tritt durch um den Drehrohrumfang verteilte Austragsöffnungen aus, und zwar insbesondere über diejenigen z. B. 9 bis 12 über den Drehrohrumfang verteilten Klinkeraustrittsrohrflansche, die nach zumindest teilweiser Demontage eines ursprünglich vorhanden gewesenen Satellitenkühlers am Drehofen noch vorhanden sind. Nach zumindest teilweiser Entfernung des Satellitenkühlers wird unterhalb der Klinkeraustrittsrohrflansche ein Rostkühler mit seiner Gutüberleiteinrichtung derart installiert, dass der Klinkeraustrag des Drehofens möglichst gleichmäßig über die Breite des Rostkühlers insbesondere Schubrostkühlers bzw. dessen Gutüberleiteinrichtung verteilt wird. Bei dieser Umrüstungsmaßnahme werden die Lagerbelastungen an den vorhandenen Lagerstationen des Drehofens nicht etwa erhöht, sondern sogar erniedrigt, so dass auch von daher die Möglichkeit besteht, die ursprüngliche Kapazität der Drehofenanlage zu steigern.

Nachdem die ursprünglich vorhanden gewesenen Satellitenkühlrohre mit ihren Einlaufkrümmern entfernt sind, werden an die verbliebenen Rohrflansche der Klinkeraustrittsöffnungen Klinkeraustrittsrohrstutzen mit veränderbarer Länge und/oder mit einer Biegung/Kröpfung angeschlossen, so dass je nach der Verdrehstellung der einzelnen Klinkeraustrittsrohrstutzen sich die jeweilige Klinkerabwurfstelle ändert und auf diese Weise der Zementklinker über die Breite des Rostkühlers gleichmäßig verteilbar ist, womit gleichzeitig Entmischungstendenzen des auf dem Rostkühler abgelegten Klinkers entgegengewirkt wird, d. h. Entmischungen vermieden werden. Die gleichmäßige Verteilung des Klinkeraustrages des Drehrohrofens über die gesamte Breite des Klinkerkühlers kann abgesehen vom Merkmal der verdrehbaren gekröpften Klinkeraustrittsrohrstutzen noch erleichtert werden, wenn der unterhalb der Klinkeraustrittsrohrstutzen angeordnete Rostkühler, insbesondere Schubrostkühler mit seiner Klinker-Transportrichtung etwa quer zur Drehofenlängsachse installiert ist.

Zwischen dem Rekuperationsbereich des Rostkühlers und den um den Drehofenrohrumfang verteilten Klinkeraustrittsrohrstutzen ist ein diese umgebendes Ofenauslaufgehäuse angeordnet, aus dem Klinkerheißluft als Sekundärluft über die Klinkeraustrittsrohrstutzen in die Sinterzone des Drehrohrofens geführt ist. Um bei gesteigerter Drehofen-Durchsatzleistung die Strömungsgeschwindigkeit der Sekundärluft in den um den Drehofenumfang verteilten Klinkeraustrittsöffnungen zu reduzieren, kann aus dem Ofenauslaufgehäuse eine Umgehungsleitung zum feststehenden Ofendeckel zwecks direkter Einführung von Sekundärluft in den Drehofen geführt sein.

Bei einer Umrüstung einer vorhandenen Drehofen-Satellitenkühleranlage zur erfindungsgemäßen Zementklinkerherstellungsanlage können die Betriebs-Stillstandszeiten sehr gering gehalten werden, weil der neu zu installierende Rostkühler vorher montierbar ist und der ursprünglich vorhandene Drehofen mit seinen Lagerstationen und seinem Antrieb belassen wird.

Die Erfindung und deren weitere Merkmale und Vorteile werden anhand des in der Zeichnung schematisch dargestellten Ausführungsbeispieles näher erläutert.

Die Zeichnung zeigt das rechte Ende eines auf wenigstens zwei Lagerstationen drehbar gelagerten Drehrohrofens 10, dessen Ende von einem Deckel 11 geschlossen ist, durch den die Brennerlanze 12 zur Beheizung der Sinterzone des Drehofens hindurchgeführt ist. Von einer ursprünglich vorhanden gewesenen Drehofen-Satellitenkühleranlage sind z. B. 9 bis 12 um den Drehrohrumfang verteilte Klinkeraustrittsrohrflansche 13 vorhanden, unterhalb von denen ein Rostkühler 14 insbesondere Schubrostkühler bzw. dessen Gutüberleiteinrichtung angeordnet ist. An die Klinkeraustrittsrohrflansche 13 sind jeweils Klinkeraustrittsrohrstutzen 15, 15a, 15b mit Krümmungen/Kröpfungen anschließbar, so dass je nach Verdrehstellung der einzelnen Klinkeraustrittsrohrstutzen der heiße Zementklinker über die Breite des Rostkühlers 14 gleichmäßig verteilbar ist, was noch dadurch erleichtert werden kann, wenn - wie im zeichnerischen Ausführungsbeispiel dargestellt - der Rostkühler insbesondere Schubrostkühler 14 mit seiner Klinker-Transportrichtung quer zur Drehofenlängsachse installiert ist. Zwischen dem Rekuperationsbereich des Rostkühlers 14 und den um den Drehofenumfang verteilten Klinkeraustrittsrohrstutzen 13 ist ein diese umgebendes Ofenauslaufgehäuse 16 angeordnet, aus dem Kühlerheißluft als Sekundärluft über die Klinkeraustrittsrohrstutzen 13 in den Drehrohrofen 10 geführt ist. Um die Strömungsgeschwindigkeiten der Sekundärluft in den Klinkeraustrittsrohrstutzen 15 bei gesteigertem Drehofendurchsatz zu reduzieren, kann aus dem Ofenauslaufgehäuse 16 eine nicht dargestellte Umgehungsleitung zum feststehenden Ofendeckel 11 zwecks direkter Einführung von Sekundärluft in den Drehofen 10 geführt sein.

Wie aus dem zeichnerischen Ausführungsbeispiel noch ersichtlich, kann das feststehende Ofenauslaufgehäuse 16 eine konzentrisch zum Drehrohrofen 10 angeordnete und mit diesem mitrotierende ringförmige Innenwandung 17 aufweisen, die der Einfachheit halber an den Klinkeraustrittsrohrflanschen 13 befestigt ist, wobei das Ofenauslaufgehäuse 16 am Übergang zur mitrotierenden Innenwandung 17 Ringdichtungen 18 aufweist, um Falschlufteintritt in die Drehofenanlage zu verhindern. Der Zwischenraum zwischen dem Mantel des Drehofens 10 und der mitrotierenden konzentrischen Innenwandung 17 des Ofenauslaufgehäuses kann durch eine besondere Luftkühlung gekühlt werden.

Die Klinkeraustrittsrohrstutzen 15, 15a, 15b sind vorzugsweise aus hitzebeständigen Werkstoffen hergestellt. Sie können doppelwandig ausgeführt sein, wobei der Zwischenraum ebenfalls eine besondere Luftkühlung erhalten kann.

Der unterhalb des Drehofens 10 installierte Rostkühler insbesondere Schubrostkühler 14 kann je nach Installations-Platzverhältnissen mit seiner Transportrichtung quer zum Drehofen, rückläufig zum Drehofen oder auch wie üblich in Verlängerungsrichtung des Drehofens installiert sein.

## Patentansprüche

1. Anlage zur Herstellung von Zementklinker aus Rohmehl, das nach seiner Vorwärmung und Calcinierung in der Sinterzone eines Drehrohrofens zum Zementklinker gebrannt wird, der in einem nachgeschalteten Kühler gekühlt wird, **gekennzeichnet durch** folgende Merkmale:
a) vor dem geschlossenen Drehofenauslaufende (11) sind um den Drehofenumfang verteilte Klinkeraustrittsrohrflansche (13) angeordnet, insbesondere solche, die nach Demontage eines ursprünglich vorhanden gewesenen Satellitenkühlers noch vorhanden sind,
b) unterhalb der Klinkeraustrittsrohrflansche (13) ist ein Rostkühler (14) angeordnet,
c) an die Klinkeraustrittsrohrflansche (13) sind jeweils Klinkeraustrittsrohrstutzen (15, 15a, 5b) unterschiedlicher Kröpfung und/oder Länge angeschlossen, so dass je nach Verdrehstellung einzelner Klinkeraustrittsrohrstutzen (15) der Klinker über die Breite des Rostkühlers (14) gleichmäßig verteilbar ist,
d) zwischen dem Rekuperationsbereich des Rostkühlers (14) und den um den Drehofenumfang verteilten Klinkeraustrittsrohrstutzen (13) ist ein diese umgebendes Ofenauslaufgehäuse (16) angeordnet, aus dem Kühlerheißluft als Sekundärluft über die Klinkeraustrittsrohrstutzen (13) in den Drehrohrofen (10) geführt ist.

2. Anlage nach Anspruch 1,
**dadurch gekennzeichnet, dass** der unterhalb der Klinkeraustrittsrohrstutzen (13) angeordnete Rostkühler (14), insbesondere Schubrostkühler, mit seiner Klinker-Transportrichtung quer zur Drehofenlängsachse installiert ist.

3. **Anlage nach Anspruch 1,**
**dadurch gekennzeichnet, dass** das Ofenauslaufgehäuse (16) eine konzentrisch zum Drehrohrofen (10) angeordnete und mit diesem mitrotierende Innenwandung (17) aufweist, die an den Klinkeraustrittsrohrflanschen (13) befestigt ist.

4. Anlage nach Anspruch 3,
**dadurch gekennzeichnet, dass** das Ofenauslaufgehäuse (16) am Übergang zur mitrotierenden Innenwandung (17) Ringdichtungen (18) aufweist.

5. Anlage nach einem der Ansprüche 1 bis 4,
**dadurch gekennzeichnet, dass** aus dem Ofenauslaufgehäuse (16) eine Umgehungsleitung zum feststehenden Ofendeckel (11) zwecks direkter Einführung von Sekundärluft in den Drehofen (10) geführt ist.

## Claims

1. Plant for manufacturing cement clinker from raw meal, which after it has been preheated and calcined in the sintering zone of a rotary tubular kiln is fired to form the cement clinker, which is cooled in a downstream cooler,
**characterized by** the following features:
a) upstream of the closed rotary kiln outlet end (11) are arranged clinker exit tube flanges (13) distributed around the rotary kiln periphery, in particular flanges which are still present after a satellite cooler that was originally present has been removed,
b) a grate cooler (14) is arranged beneath the clinker exit tube flanges (13),
c) in each case clinker exit tube connection pieces (15, 15a, 15b) of different curvature and/or length are connected to the clinker exit tube flanges (13), so that the clinker can be distributed uniformly over the width of the grate cooler (14) depending on the rotational position of individual clinker exit tube connection pieces (15),
d) between the recuperation zone of the grate cooler (14) and the clinker exit tube connection pieces (13) distributed around the rotary kiln periphery there is arranged a kiln outlet housing (16), which surrounds said components and from which cooler hot air is passed as secondary air via the clinker exit tube connection pieces (13) into the rotary tubular kiln (10).

2. Plant according to Claim 1,
**characterized in that** the grate cooler (14), in particular a reciprocating grate cooler, arranged beneath the clinker exit tube connection pieces (13) is installed with its clinker conveying direction oriented transversely to the longitudinal axis of the rotary kiln.

3. Plant according to Claim 1,
**characterized in that** the kiln outlet housing (16) has an inner wall (17) which is arranged concentrically with respect to the rotary tubular kiln (10), rotates with the latter and is secured to the clinker exit tube flanges (13).

4. Plant according to Claim 3,
**characterized in that** the kiln outlet housing (16) has ring seals (18) at the transition to the co-rotating inner wall (17).

5. Plant according to one of Claims 1 to 4,
**characterized in that** a bypass line is routed from the kiln outlet housing (16) to the stationary kiln cover (11) for the purpose of direct introduction of secondary air into the rotary kiln (10).

## Revendications

1. Installation pour la fabrication de clinker de ciment à partir de farine crue qui, après son préchauffage et sa calcination dans la zone de frittage d'un four tubulaire tournant, est brûlée en clinker de ciment qui est refroidi dans un refroidisseur qui suit, **caractérisée par** les caractéristiques suivantes:
a) avant l'extrémité de sortie fermée (11) du four tournant sont disposées, réparties autour de la périphérie du four tournant, des brides de sortie de clinker (13), en particulier celles qui sont encore présentes après le démontage d'un refroidisseur satellite qui avait été initialement présent,
b) un refroidisseur à grille (14) est disposé en dessous des brides de sortie de clinker (13),
c) des tubes de sortie de clinker (15, 15a, 15b) avec un coude différent et/ou une longueur différente sont raccordés respectivement aux brides de sortie de clinker (13), de telle façon que, selon la position angulaire des tubes individuels de sortie de clinker (15), le clinker puisse être réparti uniformément sur la largeur du refroidisseur à grille (14),
d) entre la zone de récupération du refroidisseur à grille (14) et les tubes de sortie de clinker (13) répartis autour de la périphérie du four tournant, est disposée une enceinte de sortie du four (16) entourant ceux-ci, hors de laquelle de l'air chaud du refroidisseur est guidé comme air secondaire dans le four tournant (10) par les tubes de sortie de clinker (13).

2. Installation selon la revendication 1, **caractérisée en ce que** le refroidisseur à grille (14) disposé en dessous des tubes de sortie de clinker (13), en particulier un refroidisseur à grille mobile, est installé avec son dispositif de transport de clinker transversalement à l'axe longitudinal du four tournant.

3. Installation selon la revendication 1, **caractérisée en ce que** l'enceinte de sortie du four (16) comprend une paroi intérieure (17) disposée de façon concentrique par rapport au four tournant (10) et tournant avec celui-ci, qui est fixée aux brides de sortie de clinker (13).

4. Installation selon la revendication 3, **caractérisée en ce que** l'enceinte de sortie du four (16) présente des joints d'étanchéité (18) à la transition vers la paroi intérieure rotative (17).

5. Installation selon l'une quelconque des revendications 1 à 4, **caractérisée en ce qu'**une conduite de dérivation est guidée hors de l'enceinte de sortie du four (16) vers le couvercle de four fixe (11) en vue d'une introduction directe d'air secondaire dans le four tournant (10).
